# EUROPÄISCHE PATENTANMELDUNG

(11) **EP 4 431 451 A1**
(43) Veröffentlichungstag der Anmeldung: **18.09.2024**
(21) Anmeldenummer: 23020132.9
(22) Anmeldetag: 16.03.2023
(51) Int. Cl.: C01B 3/02, B01D 53/047, B01D 53/14, B01D 53/22, B01D 53/62, C01B 3/38, C01B 3/50, H01M 8/0612

(54) **VERFAHREN UND ANLAGE ZUR HERSTELLUNG VON WASSERSTOFF**

(71) Anmelder: Linde GmbH, 82049 Pullach (DE)
(72) Erfinder: Peschel, Andreas, 82049 Pullach (DE)
(74) Vertreter: Fischer, Werner

(57) **Zusammenfassung**

Die Erfindung betrifft ein Verfahren (100) zur Erzeugung von Wasserstoff, bei dem ein kohlenstoffhaltiger Einsatz (301) unter Erhalt eines Wasserstoff und eine oder mehrere weitere Komponenten enthaltenen Produktgemischs (311) in einer Wasserstofferzeugungseinheit (31) umgesetzt wird. Zumindest ein Teil des Wasserstoffs des Produktgemisch (311) wird in eine Wasserstofffraktion (320) überführt wird, Kohlendioxid (401, 402, 403) wird aus zumindest einem in dem Verfahren (100) gebildeten Stoffstrom (305, 307, 312) abgetrennt, und eine oder mehrere Prozesskomponenten wird oder werden unter Verwendung von elektrischem Strom (421) betrieben. Es ist vorgesehen, dass der elektrische Strom (421) zumindest teilweise und zumindest zeitweise unter Verwendung einer Brennstoffzelleneinheit (10, 20) bereitgestellt wird, die mit einem Teil (420) der Wasserstofffraktion (320) als Brennstoff beschickt wird. Eine entsprechende Anlage (100) ist ebenfalls Gegenstand der vorliegenden Erfindung.

## Beschreibung

Die Erfindung betrifft ein Verfahren und eine Anlage zur Herstellung von Wasserstoff.

### Hintergrund der Erfindung

Die Erzeugung von Wasserstoff im großtechnischen Maßstab erfolgt derzeit noch überwiegend auf Basis von Kohlenwasserstoffen. Hierbei ist eine Reihe von Verfahren bekannt und in gängigen Nachschlagewerken, beispielsweise im Artikel "Hydrogen" in Ullmann's Encyclopedia of Industrial Chemistry, 15. Juni 2000, DOI: 10.1002/14356007.a13_297, Abschnitt 4, "Production", beschrieben.

Die Erzeugung von Wasserstoff kann dabei durch Umsetzung von gasförmigen, festen oder flüssigen Kohlenstoffquellen wie Erdgas, Naphtha oder Kohle erfolgen. Hierbei kann insbesondere eine katalytische Reformierung in Ausgestaltungen wie beispielsweise Dampfreformierung (engl. Steam Methane Reforming, SMR) mit Gasbeheizung oder elektrischer Beheizung oder autotherme Reformierung (engl. Autothermal Reforming, ATR) zum Einsatz kommen. Ein weiterer Weg zur Herstellung von Wasserstoff aus entsprechenden Kohlenstoffquellen umfasst die katalytische und nicht katalytische partielle Oxidation (POX, Partial Oxidation). Auch Kombinationen entsprechender Verfahren können eingesetzt werden. Da derartige Verfahren einen beträchtlichen Kohlendioxid-Fußabdruck aufweisen, wird der durch sie bereitgestellte Wasserstoff auch als "grauer" Wasserstoff bezeichnet.

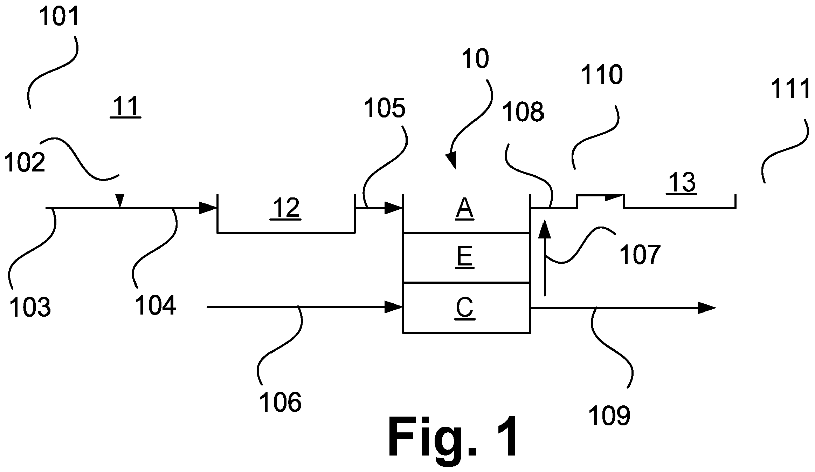

Ausgestaltungen von Dampfreformierungsverfahren zur Herstellung von Wasserstoff sind beispielsweise in der europäischen Patentanmeldung 22020126.3 der Anmelderin beschrieben. Es wird dabei insbesondere auf die dortigen Figuren 1 bis 3 und die zugehörige Figurenbeschreibung in dieser Anmeldung Bezug genommen.

Um regenerativ erzeugten elektrischen Strom nutzen und Kohlendioxidemissionen bei der Herstellung von Wasserstoff weitgehend reduzieren zu können, wird zunehmend auch die Wasserelektrolyse zur Herstellung von Wasserstoff eingesetzt.

Entsprechende Verfahren können in unterschiedlichen Ausgestaltungen durchgeführt werden. Man spricht in diesem Fall auch von "grünem" Wasserstoff.

Zumindest bis zur wirtschaftlich erfolgreichen Realisierung von Verfahren zur Herstellung von "grünem" Wasserstoff können Brückentechnologien eingesetzt werden. Diese umfassen insbesondere die Rückgewinnung und Lagerung oder Verwendung von Kohlendioxid (engl. Carbon (Dioxide) Capture and Storage, CCS bzw. Carbon (Dioxide) Capture and Utilization, CCU). In diesem Fall wird entsprechender Wasserstoff auch als "blauer" Wasserstoff bezeichnet.

Wenngleich jüngere Entwicklungen hinsichtlich der Herstellung von blauem Wasserstoff bereits bedeutende Verbesserungen mit sich gebracht haben, besteht weiterhin der Bedarf nach Verfahren, die Verbesserungen hinsichtlich Effizienz, Flexibilität und/oder Emissionen bieten.

### Offenbarung der Erfindung

Vor diesem Hintergrund werden ein Verfahren und eine Anlage zur Herstellung von Wasserstoff mit den Merkmalen der unabhängigen Patentansprüche vorgeschlagen. Ausgestaltungen sind Gegenstand der abhängigen Patentansprüche und der nachfolgenden Beschreibung.

Vor der Erläuterung der Merkmale und Vorteile der vorliegenden Erfindung werden einige Grundlagen der vorliegenden Erfindung näher erläutert und einige bei der Beschreibung der Erfindung verwendete Begriffe definiert.

Aspekte der vorliegenden Offenbarung betreffen insbesondere die Verwendung von Brennstoffzellen wie Festoxid-Brennstoffzellen, Polymerelektrolyt-Brennstoffzellen oder Schmelzkarbonat-Brennstoffzellen. Daher sollen nachfolgend zunächst Aspekte von Brennstoffzellen beschrieben werden.

Bei Festoxid-Brennstoffzellen (engl. Solid Oxide Fuel Cells, SOFC) handelt es sich um Hochtemperatur-Brennstoffzellen, die bei einer Betriebstemperatur von typischerweise 600 bis 900 °C arbeiten. Der Elektrolyt einer Festoxid-Brennstoffzelle weist ein festes keramisches Material auf, das in der Lage ist, Sauerstoffionen zu leiten, aber für Elektronen isolierend ist. Der Elektrolyt ist insbesondere als dünne Membran bereitgestellt, um die Sauerstoffionen mit geringer Energie transportieren zu können. Für den Transport der Sauerstoffionen sind die genannten hohen Temperaturen erforderlich. Auf beiden Seiten des Elektrolyten sind gasdurchlässige elektrische Leiter als Kathode und Anode angebracht. Die äußere, dem Elektrolyten abgewandte Seite der Kathode ist von Luft umgeben, die äußere Anodenseite von Brenngas. Ungenutzte Luft und ungenutztes Brenngas sowie Verbrennungsprodukte werden aus der Festoxid-Brennstoffzelle abgezogen.

Festoxid-Brennstoffzellen sind elektrochemische Apparate, die die Umwandlung von chemischer in elektrische Energie mit hoher Effizienz und ohne bewegliche Teile ermöglichen. Diese Geräte können mit unterschiedlichen Brennstoffquellen betrieben werden, darunter Kohlenwasserstoffe, reiner Wasserstoff und entsprechende Mischungen. Festoxid-Brennstoffzellen erlauben typischerweise keine vollständige Ausnutzung des Brennstoffs, da dies zu einer Deaktivierung des anodenseitigen Katalysators führen würde. Bei konventionellen Festoxid-Brennstoffzellen wird der nicht umgewandelte Brennstoff in einem Katalysator oder Nachbrenner verbrannt, wobei Wärme für die Nebenaggregate und den Wärmeexport gebildet werden kann. Das austretende Abgas enthält Stickstoff, Sauerstoff, Kohlendioxid und Wasserdampf und wird herkömmlicherweise an die Atmosphäre abgegeben.

Polymerelektrolyt-Brennstoffzellen (engl. Polymer Electrolyte Fuel Cell, PEFC, unter anderem auch als Protonenaustauschmembran-Brennstoffzellen, PEMFC, bezeichnet) sind im Gegensatz zu Festoxid-Brennstoffzellen Niedertemperatur-Brennstoffzellen. Der Elektrolyt ist normalerweise in Form einer festen Polymermembran, beispielsweise in Form eines perfluorierten Copolymers, bereitgestellt. Die Betriebstemperatur liegt im Bereich von 60 bis 120 °C, wobei für den Dauerbetrieb geringere Maximaltemperaturen von z.B. bis zu 85 °C bevorzugt werden. Die Membran ist auf beiden Seiten mit einer katalytisch aktiven Elektrode beschichtet. In einer Polymerelektrolyt-Brennstoffzelle dissoziieren Wasserstoffmoleküle auf der Anodenseite und die entstehenden Wasserstoffatome werden unter Abgabe von zwei Elektronen zu je zwei Protonen oxidiert. Diese Protonen diffundieren durch die Membran. Auf der Kathodenseite wird der Sauerstoff durch die Elektronen reduziert, die zuvor in einem externen Stromkreis elektrische Arbeit verrichten konnten. Zusammen mit den durch die Membran transportierten Protonen wird Wasser gebildet. Der elektrische Wirkungsgrad einer Polymerelektrolyt-Brennstoffzelle kann bei etwa 60 Prozent liegen.

Eine Schmelzkarbonat-Brennstoffzelle (engl. Molten Carbonate Fuel Cell, MCFC) ist wiederum eine Hochtemperatur-Brennstoffzelle, die bei einer Betriebstemperatur zwischen 580 °C und 675 °C arbeitet. Als Elektrolyt wird eine Alkalicarbonatmischung bzw. Mischschmelze aus Lithium- und Kaliumcarbonat verwendet. Charakteristisch ist eine Überführung von Kohlendioxid von der Anodenseite zur Kathodenseite. Kathodenseitig bereitgestellter Sauerstoff reagiert unter Reduktion mit entsprechendem Kohlendioxid von der Anodenseite zu Karbonationen, die durch den Elektrolyten wandern und sich an der Anodenseite mit zu oxidierendem Wasserstoff zu Wasser und Kohlendioxid verbinden. Somit wird ein elektrochemischer Kohlendioxid/Karbonat-Kreislauf mit einer konstanten Zufuhr von Wasserstoff und Sauerstoff gebildet, in dem Wasser als Produkt produziert wird. Schmelzkarbonat-Brennstoffzellen sind insbesondere vorteilhaft, weil die erforderlichen Materialien vergleichsweise kostengünstig sind. In dem eingesetzten Temperaturbereich kann eine akzeptable Reaktionsgeschwindigkeit ohne teure Edelmetallkatalysatoren erreicht werden, so dass billigere Nickelelektroden verwendet werden können.

Ist hier von einer Brennstoffzelleneinheit im Singular die Rede, versteht sich, dass es sich bei einer entsprechenden Einrichtung typischerweise um einen entsprechenden Stapel (Stack) von Brennstoffzellen beliebiger Art und Kombination handeln kann. Eine Brennstoffzelleneinheit, bzw. jede Brennstoffzelle eines entsprechenden Stapels, weist eine Anode, eine Kathode und einen Elektrolyten auf. Vorliegend ist auch von einer Anodenseite bzw. einer Kathodenseite die Rede, um zum Ausdruck zu bringen, dass die Anoden bzw. Kathoden mehrerer Brennstoffzellen(einheiten) gemeint sind.

Verfahren und Anlagen zur Herstellung von Wasserstoff auf Basis von Kohlenwasserstoffen wurden bereits eingangs unter Bezugnahme auf entsprechende Fachliteratur erwähnt. Sämtliche geeigneten Verfahren und Kombinationen hiervon können im Rahmen der vorliegenden Offenbarung eingesetzt werden.

Die Rückgewinnung und Lagerung oder Verwendung von Kohlendioxid in entsprechenden Verfahren ist ebenfalls grundsätzlich bekannt. So kann hierbei beispielsweise eine kryogene Abtrennung (beispielsweise durch Auskondensieren), eine adsorptive Abtrennung (beispielsweise durch Druckwechseladsorption, engl. Pressure Swing Adsorption, PSA) oder eine absorbtive Abtrennung (beispielsweise durch Amin- und/oder Laugewäsche) von Kohlendioxid eingesetzt werden. Auch eine Kombination entsprechender Verfahren ist möglich, beispielsweise für eine Grob- und Feinabtrennung von Kohlendioxid. Auch hier sei statt umfangreicher Erläuterungen auf einschlägige Fachliteratur wie den Artikel "Carbon Dioxide" in Ullmann's Encyclopedia of Industrial Chemistry, 30. May 2014, DOI: 10.1002/14356007.a05_165.pub2, Abschnitt 13, "Carbon Dioxide Capture", verwiesen.

Zur Kohlendioxidabtrennung kann insbesondere die Druckwechseladsorption zum Einsatz kommen. Diese basiert auf physikalischen Adsorptionsphänomenen, wobei leicht flüchtige Verbindungen mit geringer Polarität wie Wasserstoff oder Helium im Vergleich zu Molekülen wie Kohlendioxid, Kohlenmonoxid, Stickstoff und Kohlenwasserstoffen praktisch nicht adsorbierbar sind. Die zuletzt genannten Komponenten können aufgrund ihrer unterschiedlichen Adsorptionskräfte getrennt werden. Druckwechseladsorptionsverfahren arbeiten zwischen zwei Druckstufen. Die Adsorption erfolgt bei einem vergleichsweise hohen Adsorptionsdruck, während derer ein von den adsorbierten Komponenten befreites Gas oder Gasgemisch aus der Druckwechseladsorption ausgeführt wird. Dieses wird auch als "Hochdruckstrom" bezeichnet. Die Desorption erfolgt dagegen bei einem vergleichsweise niedrigen Desorptionsdruck, wobei ein hier als "Niederdruckstrom" bezeichnetes Gas oder Gasgemisch bereitgestellt werden kann. Eine Druckwechseladsorption, in der die Desorption auf einem unteratmosphärischen Druckniveau erfolgt, wird typischerweise auch als "Vakuum"-PSA (VPSA) bezeichnet. Auch eine Wasserstoffabtrennung aus einem Komponentengemisch kann im Rahmen der Erfindung mittels Druckwechseladsorption erfolgen.

Bei der Druckwechseladsorption werden typischerweise mehrere, parallel geschaltete Druckbehälter eingesetzt, die mit einem Adsorbens befüllt sind. Mittels Verbindungsleitungen und Regelventilen kann jeweils mindestens einer der Druckbehälter auf dem Adsorptionsdruck mit einem Feedgas, auch "Trenneinsatz" genannt, durchströmt und auf diese Weise ein Hochdruckstrom gebildet werden. Ein oder mehrere weitere Druckbehälter werden während dieser Zeit unter Erhalt des Niederdruckstroms regeneriert. Die Druckwechseladsorption stellt sich daher nach außen als kontinuierlicher Prozess dar, während es sich intern um einen diskontinuierlichen Prozess handelt, der aus einer Reihe von parallel ablaufenden Sequenzen besteht.

Begriffe wie "Scope-1-Emissionen", "Scope-2-Emissionen" und "Scope-3-Emissionen" werden vorliegend entsprechend dem bekannten Greenhouse Gas Protocol (GHG) verwendet. Scope-1-Emissionen sind dabei Emissionen aus Quellen, die direkt von einem Unternehmen verantwortet oder kontrolliert werden. Dazu gehören Emissionen aus Energieträgern am Standort, wie Erdgas und Brennstoffe, Kühlmittel, sowie Emissionen durch den Betrieb von Heizkesseln und Öfen. Unter Scope-1-Emissionen fallen auch Emissionen des eigenen Fuhrparks. Im Gegensatz zu derartigen direkten Emissionen entstehen indirekte Emissionen als Folge der Geschäftstätigkeit des betreffenden Unternehmens, wobei die Emissionen jedoch aus Quellen stammen, die einem anderen Unternehmen zuzuordnen sind oder von diesem kontrolliert werden. Dazu gehören die Scope 2- und Scope 3-Emissionen. Scope-2-Emissionen sind dabei indirekte Emissionen aus von einem anderen Unternehmen bezogener Energie, wie Strom, Wasserdampf, Fernwärme oder Fernkälte, die außerhalb der Systemgrenzen des eigenen Unternehmens erzeugt, aber von dem eigenen Unternehmen verbraucht werden. Scope-3-Emissionen umfassen verkürzt ausgedrückt alle indirekten Emissionen, die entlang der Wertschöpfungskette entstehen.

Die vorliegende Offenbarung addressiert insbesondere das folgende Problem: Verfahren und Anlagen zur Herstellung von blauem Wasserstoff weisen einen geringen Kohlendioxid-Fußabdruck hinsichtlich Scope-1-Emissionen auf. Zur Versorgung mit elektrischer Energie kann dabei auf extern bezogenen, regenerativ erzeugten elektrischen Strom zurückgegriffen werden, so dass sich auch geringe bis keine Scope-2-Emissionen ergeben. Allerdings ist entsprechend erzeugter elektrischer Strom nicht immer und überall verfügbar, so dass unter Erhöhung der Scope-2-Emissionen beispielsweise auf fossil erzeugten elektrischen Strom zurückgegriffen werden muss.

Mit den hier vorgeschlagenen Maßnahmen können entsprechende Probleme zumindest zum Teil gelöst werden. Die vorliegende Offenbarung schlägt dabei vor, elektrischen Strom für die Herstellung von blauem Wasserstoff zumindest teilweise und/oder zumindest zeitweise unter Verwendung einer Brennstoffzelleneinheit bereitzustellen, die mit entsprechendem blauem Wasserstoff gespeist wird.

Das vorgeschlagene Verfahren zur Erzeugung von Wasserstoff umfasst, einen kohlenwasserstoffhaltigen Einsatz unter Erhalt eines Wasserstoff und eine oder mehrere weitere Komponenten enthaltenen Produktgemischs in einer Wasserstofferzeugungseinheit umzusetzen. Zumindest ein Teil des Wasserstoffs des Produktgemisch wird in eine Wasserstofffraktion überführt, Kohlendioxid wird aus zumindest einem in dem Verfahren gebildeten Stoffstrom abgetrennt und eine oder mehrere Prozesskomponenten wird oder werden unter Verwendung von elektrischem Strom betrieben.

In dem vorgeschlagenen Verfahren wird der elektrische Strom zumindest teilweise und zumindest zeitweise unter Verwendung einer Brennstoffzelleneinheit bereitgestellt, die mit einem Teil der Wasserstofffraktion als Brennstoff beschickt wird. Mit einem derartigen Verfahren wird insbesondere die Abhängigkeit einer entsprechenden Anlage von fluktuierend bereitstehendem elektrischem Strom reduziert, ohne den Kohlendioxid-Fußabdruck zu erhöhen. Durch die vorgeschlagenen Maßnahmen können auch insbesondere netzunabhängige Insellösungen realisiert werden.

Wie bereits zuvor erwähnt, kann die Brennstoffzelleneinheit eine oder mehrere Festoxid-Brennstoffzellen, eine oder mehrere Schmelzkarbonat-Brennstoffzellen und/oder eine oder mehrere Polymermembran-Brennstoffzellen, ggf. in beliebiger Kombination, aufweisen. Der Fachmann wählt die geeignete Elektrolysetechnologie dabei insbesondere nach Verfügbarkeit, technischer Reife und Ausbeute, ggf. unter Abwägung entsprechender Vor- und Nachteile, aus.

Insbesondere kann in Ausgestaltungen der vorliegenden Erfindung der elektrische Strom in einem ersten Verfahrensmodus zumindest zum Teil unter Verwendung der Brennstoffzelleneinheit bereitgestellt werden. In einem zweiten Verfahrensmodus wird der elektrische Strom dagegen in einer entsprechenden Ausgestaltung nicht oder in einer geringeren Menge als in dem ersten Verfahrensmodus unter Verwendung der Brennstoffzelleneinheit bereitgestellt. Hiermit kann insbesondere gemeint sein, dass in dem ersten Verfahrensmodus vergleichsweise viel Strom aus Eigenproduktion bis zur vollständigen Deckung des Bedarfs und in dem zweiten Verfahrensmodus vergleichsweise wenig Strom aus Eigenproduktion und viel aus einem Stromimport, bis hin zur vollständigen Bedarfsdeckung durch Stromimport, bereitgestellt wird. Die Brennstoffzelleneinheit wird insbesondere dazu verwendet, um eine Versorgungslücke von regenerativ erzeugtem elektrischem Strom in dem ersten Verfahrensmodus auszugleichen und die Brennstoffzelleneinheit kann entsprechend bemessen sein.

In dem zweiten Verfahrensmodus kann also der elektrische Strom zumindest zum Teil als regenerativer (d.h. regenerativ erzeugter) elektrischer Strom bereitgestellt werden, während im ersten Verfahrensmodus der elektrische Strom nicht oder in einer geringeren Strommenge als in zweiten Verfahrensmodus als regenerativer elektrischer Strom bereitgestellt wird. Der Begriff "regenerativer elektrischer Strom" bzw. "regenerativ bereitgestellter elektrischer Strom" soll dabei elektrischen Strom bezeichnen, der beispielsweise unter Verwendung von Wind-, Wasser-, Gezeiten-, Solar-, Erdwärmeenergie oder einer anderen, insbesondere fluktuierend bzw. nicht permanent zur Verfügung stehenden Energie bereitgestellt wird.

In einer Ausgestaltung der vorliegenden Offenbarung kann auch ein Inselbetrieb vorgesehen sein, d.h. es wird kein Strom über einen Stromnetzanschluss verwendet. Insbesondere kann dabei lokal eine erneuerbare Energiequelle, z.B. Photovoltaik und/oder Wind, verwendet werden.

Wie mehrfach erläutert, kann die Wasserstofferzeugungseinheit zur Umsetzung einer oder mehrerer gasförmiger, fester oder flüssiger Kohlenstoffquellen durch ein Umsetzungsverfahren eingerichtet sein, wobei beliebige geeignete Ausgangsstoffe, insbesondere aber Erdgas, eingesetzt werden können.

Wie ebenfalls erwähnt, kann ein entsprechendes Umsetzungsverfahren eine katalytische Reformierung in Form einer Dampfreformierung mit Befeuerung oder elektrischer Beheizung, einer autothermen Reformierung, einer katalytischen oder nicht katalytischen partiellen Oxidation oder einer Kombination hiervon durchgeführt werden.

In Ausgestaltungen des vorgeschlagenen Verfahrens kann Kohlendioxid an beliebigen geeigneten Stellen abgetrennt werden, insbesondere aus einem in der Wasserstofferzeugungseinheit gebildeten Produktgemisch oder einem hieraus gebildeten Folgegemisch, aus einem bei der Bildung der Wasserstofffraktion verbleibenden Restgasgemisch oder einem hieraus gebildeten Folgegemisch und/oder aus einem ggf. bei einer Befeuerung der Wasserstofferzeugungseinheit gebildeten Rauchgas oder einem hieraus gebildeten Folgegemisch. Hierbei soll der Begriff "Folgegemisch" insbesondere ein durch einen oder mehrere beliebige Verfahrensschritte aus dem jeweiligen Ausgangsemisch gebildetes Gemisch bezeichnen, wobei Verfahrensschritte beispielsweise eine Verdichtung, eine Kühlung, eine Kondensation, eine Trennung und dergleichen umfassen können.

Sämtliche der zuvor erläuterten Verfahren können zur Abtrennung des Kohlendioxids zum Einsatz kommen, diese kann also zumindest zum Teil adsorptiv, absorptiv, kryogen und/oder kondensativ und/oder unter Verwendung einer Membrantrenntechnik durchgeführt werden.

Der elektrische Strom kann in Ausgestaltungen der vorliegenden Erfindung insbesondere zur Beheizung und/oder zum Antreiben eines oder mehrerer Verdichter in dem Verfahren oder in einem dem Verfahren zugeordneten Verfahren verwendet werden, beispielsweise auch eines beliebigen Verdichters einer Luftzerlegungseinheit, die ein Luftzerlegungsverfahren durchführt, und die beispielsweise zur Bereitstellung von Sauerstoff verwendet werden kann.

Ausgestaltungen der Erfindung können insbesondere auch umfassen, dass die Brennstoffzelleneinheit zumindest zeitweise zur Bereitstellung von aus dem Verfahren exportiertem elektrischem Strom verwendet wird.

Ausgestaltungen der Erfindung können ferner umfassen, dass zumindest ein Teil des Wasserstoffs, insbesondere sofern dieser nicht zur Bereitstellung des elektrischen Stroms verwendet wird, zur Erzeugung von Ammoniak in einem Ammoniaksyntheseverfahren bekannter Art verwendet wird.

Eine Anlage zur Erzeugung von Wasserstoff, die dafür eingerichtet ist, einen kohlenstoffhaltigen Einsatz unter Erhalt eines Wasserstoff und eine oder mehrere weitere Komponenten enthaltenen Produktgemischs in einer Wasserstofferzeugungseinheit umzusetzen, die ferner dafür eingerichtet ist, zumindest einen Teil des Wasserstoffs des Produktgemisch in eine Wasserstofffraktion zu überführen, die ferner dafür eingerichtet ist, Kohlendioxid aus zumindest einem in dem Verfahren gebildeten Stoffstrom abzutrennen, und die ferner dafür eingerichtet ist, eine oder mehrere Prozesskomponenten unter Verwendung von elektrischem Strom zu betreiben, wird ebenfalls vorgeschlagen.

Hierbei ist vorgesehen, dass die Anlage dafür eingerichtet ist, den elektrischen Strom zumindest teilweise und zumindest zeitweise unter Verwendung einer Brennstoffzelleneinheit bereitzustellen und die Brennstoffzelleneinheit mit einem Teil der Wasserstofffraktion als Brennstoff zu beschicken.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

### Kurze Beschreibung der Zeichnung

Ausführungsformen der Erfindung werden nachfolgend rein beispielhaft unter Bezugnahme auf die beigefügte Zeichnung unter Erläuterung des technischen Hintergrunds beschrieben.
Figur 1 veranschaulicht eine Brennstoffzelleneinheit, die in einem Verfahren bzw. einer Anlage gemäß einer Ausführungsform der Erfindung eingesetzt werden kann.
Figur 2 veranschaulicht eine Brennstoffzelleneinheit, die in einem Verfahren bzw. einer Anlage gemäß einer Ausführungsform der Erfindung eingesetzt werden kann.
Figur 3 veranschaulicht ein Verfahren bzw. eine Anlage zur Herstellung von Wasserstoff gemäß einer nicht erfindungsgemäßen Ausführungsform.
Figur 4 veranschaulicht ein Verfahren bzw. eine Anlage zur Herstellung von Wasserstoff gemäß einer Ausführungsform der vorliegenden Erfindung.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

In Figur 1 ist eine Festoxid-Brennstoffzelleneinheit, die gemäß Ausgestaltungen der vorliegenden Erfindung eingesetzt werden kann, mit zugehörigen Apparaten bzw. Einrichtungen in Form eines vereinfachten Diagramms veranschaulicht.

Die Festoxid-Brennstoffzelleneinheit ist insgesamt mit 10 angegeben. Diese, bzw. jede Festoxid-Brennstoffzelle eines entsprechenden Stapels wie oben erläutert, weist eine Anode A, eine Kathode C und einen Elektrolyten E auf. Wie erwähnt ist dabei auch von einer Anodenseite A bzw. einer Kathodenseite C die Rede, um zum Ausdruck zu bringen, dass die Anoden bzw. Kathoden mehrerer Festoxid-Brennstoffzellen bzw. Brennstoffzelleneinheiten oder Brennstoffzellenstapel gemeint sein können.

Einer Dampferzeugungseinheit 11 wird ein Wasserstrom 101 zugeführt. Ein in der Dampferzeugungseinheit 101 erzeugter Dampfstrom 102 wird mit einem Einsatzstrom 103, der einen Brennstoff wie Wasserstoff und/oder einen Kohlenwasserstoff enthält, zu einem Sammelstrom 104 vereinigt. Der Sammelstrom 104 kann in einer optionalen Präreformiereinheit 12 vorbehandelt werden. Dies kann insbesondere bei kohlenwasserstoffhaltigen Einsatzströmen 103 vorgesehen sein.

Der entsprechend vorbehandelte Sammelstrom 105 wird der Anodenseite Ader Festoxid-Brennstoffzelleneinheit 10. An der Kathodenseite C wird zur Bereitstellung von Sauerstoff ein Luftstrom 106 zugeführt. Der oder die Brennstoffe des Einsatzstroms 103 werden mit Sauerstoffionen, hier mit 107 angedeutet, die durch die Membran(en) der Festoxid-Brennstoffzelleneinheit 10 wandern, in an sich bekannter Weise unter Gewinnung von elektrischem Strom umgesetzt, so dass der Anodenseite A ein an Brennstoff(en) ab- und an Kohlendioxid angereichertes Gasgemisch in Form eines Stoffstroms 108 und der Kathodenseite C an Sauerstoff abgereicherte Luft in Form eines Stoffstroms 109 entnommen werden können.

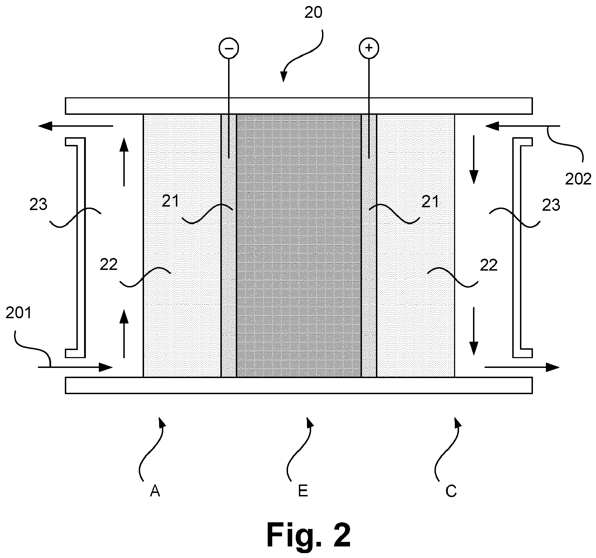

In Figur 2 ist eine Polymerelektrolyt-Brennstoffzelleneinheit, die gemäß Ausgestaltungen der vorliegenden Erfindung eingesetzt werden kann, ebenfalls in Form eines vereinfachten Diagramms veranschaulicht.

Die Polymerelektrolyt-Brennstoffzelleneinheit ist insgesamt mit 20 angegeben. Auch hier können mehrere Brennstoffzellen bzw. Zellstapel vorgesehen sein, wobei eine Anode bzw. Anodenseite auch hier mit A, eine Kathode bzw. Kathodenseite mit C, und ein Elektrolyt mit E bezeichnet sind. Bei dem Elektrolyten E, der zusätzlich mit einer Kreuzschraffur angegeben ist, handelt es sich um einen Polymerelektrolyten der zuvor genauer erläuterten Art, auf welchen geeignete Elektroden 21 aufgebracht sind, die zusätzlich mit den entsprechenden Polaritäten bezeichnet und mit einer Schrägschraffur veranschaulicht sind. Anoden- und kathodenseitig schließt sich jeweils eine Gasdiffusionsschicht 22 an, die mit einer Punktschraffur veranschaulicht ist, und die einen Gasraum 23 von den Elektroden 21 diffusibel abgrenzt.

Wie mit einem Pfeil 201 veranschaulicht, wird dem Gasraum 23 an der Anodenseite A ein Gemisch aus Wasserstoff und Wasser zugeführt. Wie erwähnt, dissoziieren die Wasserstoffmoleküle auf der Anodenseite A und die entstehenden Wasserstoffatome werden unter Abgabe von zwei Elektronen zu je zwei Protonen oxidiert. Diese Protonen diffundieren durch die Membran. Auf der Kathodenseite werden dem Gasraum 23 an der Anodenseite A Sauerstoff und Wasser in einem Stoffstrom 292 zugeführt, wobei der Sauerstoff durch die Elektronen, die von der Anoden- zur Kathodenseite in einem externen Stromkreis fließen, reduziert wird. Zusammen mit den durch die Elektrode E transportierten Protonen wird Wasser gebildet.

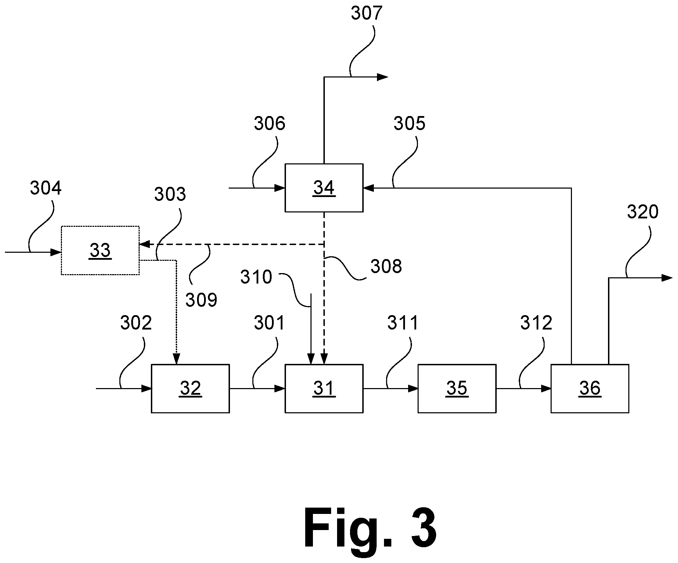

In Figur 3 ist ein Verfahren zur Herstellung von Wasserstoff gemäß einer nicht erfindungsgemäßen Ausgestaltung veranschaulicht, wobei in dem in Figur 3 veranschaulichten Beispiel eine Reformierung zum Einsatz kommt. Zu den hierbei einsetzbaren Reformierungstechniken sei auf die eingangs vorgenommenen Erläuterungen verwiesen. Je nach Verfahren können dabei die nachfolgenden Komponenten bzw. Medien vorhanden sein oder nicht.

In der in Figur 3 veranschaulichten Anlage wird einer Wasserstofferzeugungseinheit 31, die hier als Reformiereinheit ausgebildet ist, ein Gasgemisch 301 zugeführt, das im hier veranschaulichten Beispiel einer Vorbehandlungseinheit 32 entnommen wird. Der Vorbehandlungseinheit 32 werden ein Kohlenwasserstoffe enthaltender Einsatzstrom 302 zugeführt, sowie, z.B. im Falle einer Dampfreformierung, ein Dampfstrom 303 aus einer Dampferzeugungseinheit 33, die mit einem Wasserstrom 304 beschickt wird.

In dem hier veranschaulichten Beispiel ist eine Wärmeerzeugungseinheit 34 vorgesehen, die insbesondere in einen Reformierreaktor bzw. die Reformierungseinheit 31 integrierte Brenner aufweisen kann und abweichend zu der in Figur 3 veranschaulichten Beispiel typischerweise nicht extern bereitgestellt ist.

Die Wärmeerzeugungseinheit 34 wird mit einem geeigneten Brennstoffstrom 305 sowie einem sauerstoffhaltigen Strom 306, beispielsweise Verbrennungsluft, beschickt. Aus der Wärmeerzeugungseinheit 34 kann ein Abgasstrom 307 ausgeführt. Wärme kann, wie mit gestrichelten Pfeilen 308, 309 veranschaulicht, der Reformierungseinheit 31 und ggf. der Dampferzeugungseinheit 33 zugeführt werden.

Der Reformierungseinheit 31, der ein weiterer Sauerstoffstrom 310 zugeführt werden kann, wird ein Produktgemisch 311 entnommen und einer Wassergasshifteinheit 35 zugeführt, in der der Wasserstoffgehalt in dem Produktgemisch 311 in bekannter Weise durch Umsetzen von Kohlenmonoxid zu Wasserstoff und Kohlendioxid erhöht werden kann. Ein entsprechend erhaltener Folgestrom 312 kann in einer Wasserstoffabtrenneinheit 36, die eine Druckwechseladsorptionseinrichtung und dergleichen aufweisen kann, getrennt werden.

Der Wasserstoffabtrenneinheit 36 kann ein (im Wesentlichen) reiner Wasserstoffstrom 320 entnommen werden. Es verbleibt ein Wasserstoff und andere Gaskomponenten enthaltendes Restgas, das in Form des Brenngasstroms 305 in die Wärmeerzeugungseinheit 34 zurückgeführt werden kann.

Es wurden verschiedene Strategien vorgeschlagen, um die Kohlendioxidemissionen der beschriebenen und in Figur 3 veranschaulichten Wasserstoffherstellungsanlage zu reduzieren. Dazu gehören die Abscheidung von Kohlendioxid aus dem Prozessgas vor der Druckwechseladsorption, die Abscheidung von Kohlendioxid aus dem Abgas bzw. Restgas der Druckwechseladsorption, und die Abscheidung von Kohlendioxid aus dem Rauchgas, das bei der Verbrennung des Restgases der Druckwechseladsorption und/oder des zusätzlichen Brennstoffs entsteht, der für die Beheizung der Reformiereinheit und die Dampferzeugung benötigt wird.

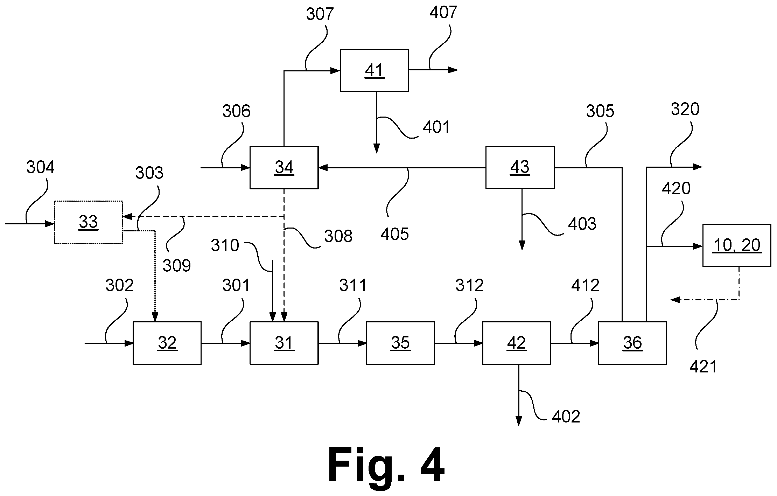

Zu den typischen Abscheidungsmethoden gehören Absorptions- und Adsorptionsverfahren sowie membranbasierte Trennung und Niedertemperatur-Gas-Flüssigkeits-Trennung. Bei der Verwendung von gereinigtem Sauerstoff als Oxidationsmittel bei der Verbrennung des erwähnten Abgases und/oder Zusatzbrennstoffs kann außerdem ein kohlendioxidreicher Strom durch Kondensation des Wassers im Rauchgas gewonnen werden. Eine Übersicht über die Ströme, die für die Kohlendioxidabscheidung in Frage kommen, findet sich nachfolgend unter Bezugnahme auf Figur 4.

In Figur 4 ist ein Verfahren zur Herstellung von Wasserstoff gemäß einer Ausgestaltung der vorliegenden Erfindung veranschaulicht, wobei die Anlage, die insgesamt mit 100 bezeichnet ist, die bereits zu Figur 3 erläuterten Komponenten umfasst. In Figur 4 ist dabei eine Reformierung mit Kohlendioxidabtrennung veranschaulicht, die bis auf die Verwendung von drei (alternativ oder in beliebiger Kombination, oder jeweils alleine bereitgestellter) Kohlendioxidabtrenneinheiten 41, 42, 43, in denen jeweils Kohlendioxidströme 401, 402, 403 abgetrennt werden, im Wesentlichen der Reformierung entsprechen kann, die in Figur 3 dargestellt ist.

Die jeweils an Kohlendioxid abgereicherten Ströme sind mit gegenüber Figur 3 um 100 inkrementierten Bezugszeichen angegeben. Diese werden anstelle der ursprünglichen Stoffströme 307, 412 bzw. 405 bereitgestellt bzw. verwendet.

Wie in Figur 4 veranschaulicht, wird in dem hier dargestellten Verfahren 100 eine Brennstoffzelleneinheit 10 bzw. 20, insbesondere der in den Figuren 1 und 2 erläuterten Art, eingesetzt, wobei der Brennstoffzelleneinheit 10 bzw. 20 ein mit 420 bezeichneter Anteil des Wasserstoffstroms 320 zugeführt werden kann. In der Brennstoffzelleneinheit 10 bzw. 20 wird elektrischer Strom, der in Form eines strichpunktiert dargestellten Pfeils veranschaulicht ist, produziert und in das Verfahren 100 zurückgeführt. Wie erläutert, kann eine entsprechende Stromproduktion insbesondere zeitweise erfolgen.

## Patentansprüche

1. Verfahren (100) zur Erzeugung von Wasserstoff, bei dem ein kohlenstoffhaltiger Einsatz (301) unter Erhalt eines Wasserstoff und eine oder mehrere weitere Komponenten enthaltenen Produktgemischs (311) in einer Wasserstofferzeugungseinheit (31) umgesetzt wird, bei dem zumindest ein Teil des Wasserstoffs des Produktgemisch (311) in eine Wasserstofffraktion (320) überführt wird, bei dem Kohlendioxid (401, 402, 403) aus zumindest einem in dem Verfahren (100) gebildeten Stoffstrom (305, 307, 312) abgetrennt wird, und bei dem eine oder mehrere Prozesskomponenten unter Verwendung von elektrischem Strom (421) betrieben wird oder werden, **dadurch gekennzeichnet, dass** der elektrische Strom (421) zumindest teilweise und zumindest zeitweise unter Verwendung einer Brennstoffzelleneinheit (10, 20) bereitgestellt wird, die mit einem Teil (420) der Wasserstofffraktion (320) als Brennstoff beschickt wird.

2. Verfahren (100) nach Anspruch 1, bei dem die Brennstoffzelleneinheit (10, 20) eine oder mehrere Festoxid-Brennstoffzellen, Polymermembran-Brennstoffzellen und/oder Schmelzkarbonat-Brennstoffzellen aufweist.

3. Verfahren (100) nach Anspruch 1 oder Anspruch 2, bei dem der elektrische Strom (421) in einem ersten Verfahrensmodus zumindest zum Teil unter Verwendung der Brennstoffzelleneinheit (10, 20) bereitgestellt wird, und bei dem der elektrische Strom (421) in einem zweiten Verfahrensmodus nicht oder in einer geringeren Strommenge als in dem ersten Verfahrensmodus unter Verwendung der Brennstoffzelleneinheit (10, 20) bereitgestellt wird.

4. Verfahren (100) nach Anspruch 3, bei dem der elektrische Strom (421) in dem zweiten Verfahrensmodus zumindest zum Teil als regenerativer elektrischer Strom bereitgestellt wird, und bei dem der elektrische Strom (421) in dem ersten Verfahrensmodus nicht oder in einer geringeren Strommenge als in dem ersten Verfahrensmodus als regenerativer elektrischer Strom bereitgestellt wird.

5. Verfahren (100) nach einem der vorstehenden Ansprüche, bei dem die Wasserstofferzeugungseinheit (31) zur Umsetzung einer oder mehrerer gasförmiger, fester oder flüssiger Kohlenstoffquellen durch ein Umsetzungsverfahren eingerichtet ist.

6. Verfahren (100) nach Anspruch 5, bei dem das Umsetzungsverfahren eine katalytische Reformierng in Form einer mittels Befeuerung und/oder elektrisch beheizten Dampfreformierung, einer autothermen Reformierung, einer katalytischen oder nichtkatalytischen partiellen Oxidation oder einer Kombination hiervon ausgewählt ist.

7. Verfahren (100) nach einem der vorstehenden Ansprüche, bei dem das Kohlendioxid (401, 402, 403) aus einem in der Wasserstofferzeugungseinheit (31) gebildeten Produktgemisch (312) oder einem hieraus gebildeten Folgegemisch, aus einem bei der Bildung der Wasserstofffraktion (320) verbleibendem Restgasgemisch (305) oder einem hieraus gebildeten Folgegemisch und/oder aus einem bei einer Befeuerung der Wasserstofferzeugungseinheit (31) gebildeten Rauchgas (307) oder einem hieraus gebildeten Folgegemisch abgetrennt wird.

8. Verfahren (100) nach einem der vorstehenden Ansprüche, bei dem die Abtrennung des Kohlendioxids (401, 402, 403) zumindest zum Teil adsorptiv, absorptiv, kryogen und/oder kondensativ und/oder unter Verwendung einer Membrantrenntechnik durchgeführt wird.

9. Verfahren (100) nach einem der vorstehenden Ansprüche, bei dem der elektrische Strom (421) zur Beheizung und/oder zum Antreiben eines oder mehrerer Verdichter in dem Verfahren (100) oder einem dem Verfahren (100) zugeordneten Verfahren verwendet wird.

10. Verfahren (100) nach einem der vorstehenden Ansprüche, bei dem die Brennstoffzelleneinheit (10, 20) zumindest zeitweise zur Bereitstellung von aus dem Verfahren (100) exportiertem elektrischem Strom verwendet wird.

11. Verfahren (100) nach einem der vorstehenden Ansprüche, bei dem der Wasserstoff zumindest zeitweise und zumindest teilweise zur Erzeugung von Ammoniak in einem Ammoniaksyntheseverfahren verwendet wird.

12. Anlage zur Erzeugung von Wasserstoff, die dafür eingerichtet ist, einen kohlenstoffhaltigen Einsatz (301) unter Erhalt eines Wasserstoff und eine oder mehrere weitere Komponenten enthaltenen Produktgemischs (311) in einer Wasserstofferzeugungseinheit (31) umzusetzen, die ferner dafür eingerichtet ist, zumindest einen Teil des Wasserstoffs des Produktgemisch (311) in eine Wasserstofffraktion (320) zu überführen, die ferner dafür eingerichtet ist, Kohlendioxid (401, 402, 403) aus zumindest einem in dem Verfahren (100) gebildeten Stoffstrom (305, 307, 312) abzutrennen, und die ferner dafür eingerichtet ist, eine oder mehrere Prozesskomponenten unter Verwendung von elektrischem Strom (421) zu betreiben, **dadurch gekennzeichnet, dass** die Anlage dafür eingerichtet ist, den elektrischen Strom (421) zumindest teilweise und zumindest zeitweise unter Verwendung einer Brennstoffzelleneinheit (10, 20) bereitzustellen und die Brennstoffzelleneinheit (10, 20) mit einem Teil (420) der Wasserstofffraktion (320) als Brennstoff zu beschicken.

13. Anlage nach Anspruch 12, die zur Durchführung eines Verfahrens (100) nach einem der Ansprüche 1 bis 11 eingerichtet ist.
